(19) Europäisches Patentamt
European Patent Office
Office européen des brevets

(11) Veröffentlichungsnummer: **0 601 456 A1**

(12) **EUROPÄISCHE PATENTANMELDUNG**

(21) Anmeldenummer: **93119351.0**

(22) Anmeldetag: **01.12.93**

(51) Int. Cl.$^5$: **C08K 7/14**, C08L 45/00

(30) Priorität: **04.12.92 DE 4240784**

(43) Veröffentlichungstag der Anmeldung: **15.06.94 Patentblatt 94/24**

(84) Benannte Vertragsstaaten: **AT BE CH DE DK ES FR GB IT LI NL SE**

(71) Anmelder: **HOECHST AKTIENGESELLSCHAFT**
**Brüningstrasse 50**
**D-65929 Frankfurt am Main(DE)**

(72) Erfinder: **Epple, Ulrich, Dr.**
**Alter Höchster Weg 8**
**D-65760 Eschborn(DE)**
Erfinder: **Brekner, Michael-Joachim, Dr.**
**Geisenheimer Strasse 90**
**D-60529 Frankfurt am Main(DE)**

(54) **Glasfaserverstärkfes Cycloolefinpolymer-Material und Verfahren zu seiner Herstellung.**

(57) Ein glasfaserverstärktes Cycloolefinpolymer-Material besteht aus 1 bis 99 Gew.-% mindestens eines Cycloolefinpolymers, insbesondere ein Norbornen-Ethylen-Copolymer, und 99 bis 1 Gew.-% Glasfaser. Der Absolutbetrag der Brechungsindexdifferenz (Brechungsindex von Glas der Glasfaser minus Brechungsindex Cycloolefinpolymer) beträgt für jedes Cycloolefinpolymer maximal 0,015 und der Brechungsindex der Glasfaser liegt im Bereich von 1,510 bis 1,560. Die Materialien besitzen gute mechanische Eigenschaften und hohe Lichtdurchlässigkeit. Vorzugsweise enthalten die eingesetzten Glasfasern keine Schlichte.

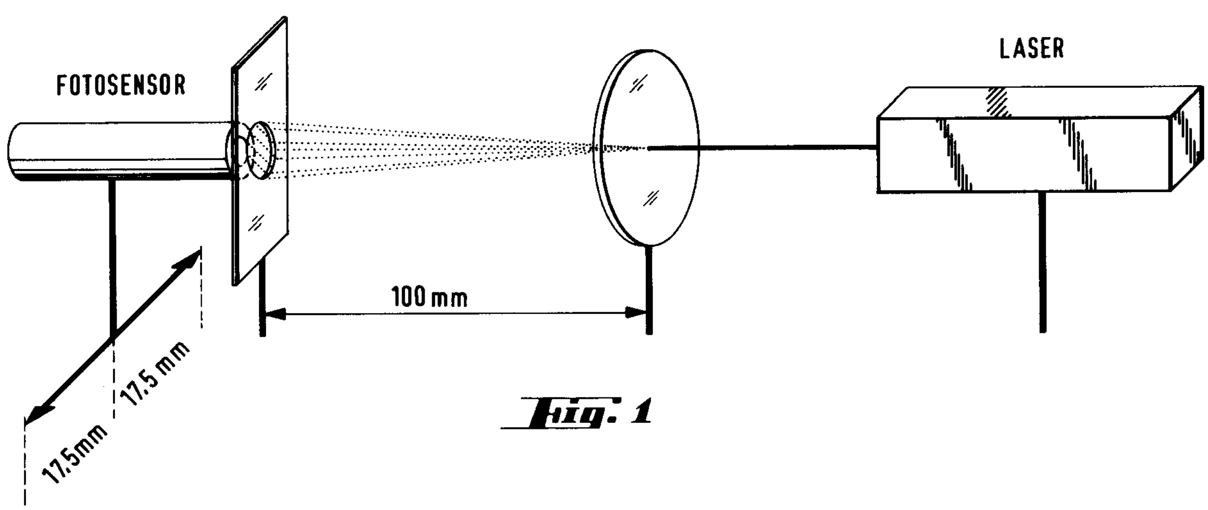


Fig. 1

EP 0 601 456 A1

Die vorliegende Erfindung betrifft ein glasfaserverstärktes Cycloolefinpolymer-Material, Verfahren zu seiner Herstellung ausgehend von Glasfasern und einem Cycloolefinpolymer sowie Formkörper, die aus dem Material bestehen.

Cycloolefinpolymere sind eine Polymerklasse mit herausragendem Eigenschaftsniveau. Sie zeichnen sich u.a. durch z.T. hohe Wärmeformbeständigkeit, Transparenz, hydrolytische Stabilität, geringe Wasseraufnahme, Witterungsbeständigkeit und hohe Steifigkeit aus.

Es ist bekannt, daß Cycloolefine mittels verschiedener Katalysatoren polymerisiert werden können. Dabei verläuft die Polymerisation in Abhängigkeit vom Katalysator über Ringöffnung oder unter Öffnung der Doppelbindung

Bekannt ist, daß in Cycloolefinpolymerblends faserförmige bzw. partikuläre Verstärkungsstoffe eingearbeitet werden können.

In Japan Kokai JP 03,207,739 wird über eine Thermoplast-Kombination referiert, die aus Glasfasern und einem statistischen Copolymer von Cycloolefin und Ethylen besteht. Sie enthält auf 100 Teile Glasfasern 1 bis 100 Teile Copolymer. Spritzgegossene Teile besitzen eine hohe Wärmebeständigkeit, Steifigkeit, Kratzfestigkeit, Rißbeständigkeit, Wasserbeständigkeit sowie geringen Schrumpf und einen niedrigen linearen, thermischen Expansionskoeffizienten. Teilweise werden Copolymere verwendet, die mit Maleinsäureanhydrid modifiziert wurden.

Die beschriebenen Cycloolefinpolymer-Composites besitzen keine Transparenz, da unterschiedliche Füllstoffe in den Composites verwendet werden. Um transparente Cycloolefinpolymer-Composites herzustellen, die auch für optische Anwendungen in Frage kommen, ist eine hohe Mindestlichtdurchlässigkeit gefordert.

Aufgabe der vorliegenden Erfindung ist es daher, Composites aus Cycloolefinpolymeren und Glasfasern bereitzustellen, die gute mechanische Eigenschaften und gleichzeitig möglichst hohe Lichtdurchlässigkeiten besitzen.

Die vorliegende Erfindung löst diese Aufgabe.

Es wurde nun ein glasfaserverstärktes Cycloolefinpolymer-Material bestehend aus 1 bis 99 Gew.-% mindestens eines Cycloolefinpolymers und 99 bis 1 Gew.-% Glasfaser gefunden, das dadurch gekennzeichnet ist, daß der Absolutbetrag der Brechungsindexdifferenz (Brechungsindex von Glas der Glasfaser minus Brechungsindex Cycloolefinpolymer) für jedes Cycloolefinpolymer maximal 0,015 beträgt und der Brechungsindex der Glasfaser im Bereich von 1,510 bis 1,560 liegt. Vorzugsweise enthält das Material 10 bis 90 Gew.-% Cycloolefinpolymer und 90 bis 10 Gew.-% Glasfaser.

Massive Formkörper, die aus dem erfindungsgemäßen Material bestehen, weisen eine Direct Transmission (In-line-Lichtdurchlässigkeit) von mindestens 40 % auf. Die Direct Transmission wird an einer Preßplatte von 1 mm Dicke mit einer speziell gebauten Apparatur vermessen. Dabei wird nur das in Richtung des Lichtstrahls durch die Platte austretende Licht berücksichtigt und nicht das gestreute Licht.

Vorzugsweise besitzen die eingesetzten Cycloolefinpolymere einen Brechungsindex im Bereich von 1,525 bis 1,545. Poly-Norbornen weist einen Brechungsindex von 1,534 auf (Kirk-Othmer, Encyclopedia of Chemical Technology, Vol. 11, 303).

Cycloolefinpolymere, die für die erfindungsgemäßen Materialien eingesetzt werden können, enthalten Struktureinheiten, die sich von mindestens einem Monomeren der Formeln (I) bis (VI) oder (VII) ableiten:

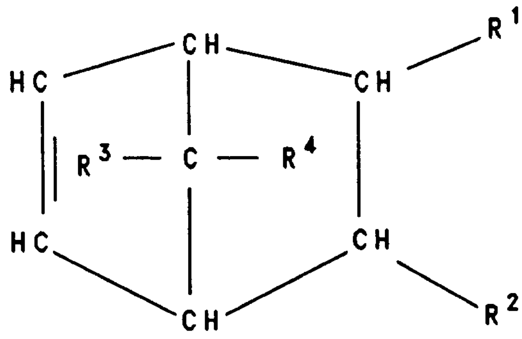

(I)

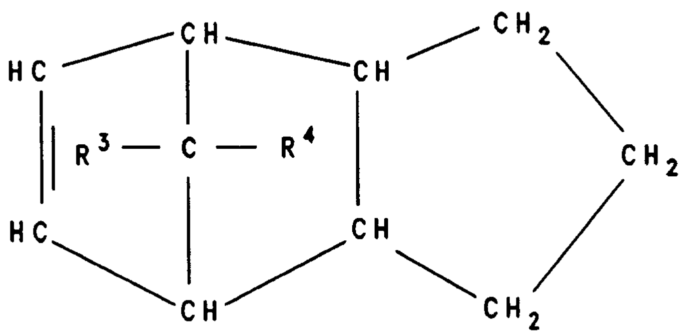

(II)

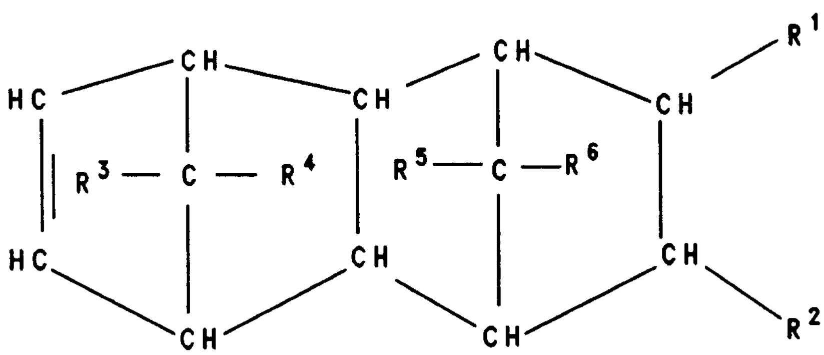

(III)

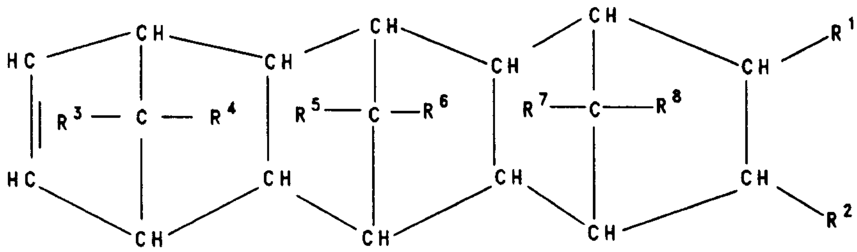

(IV)

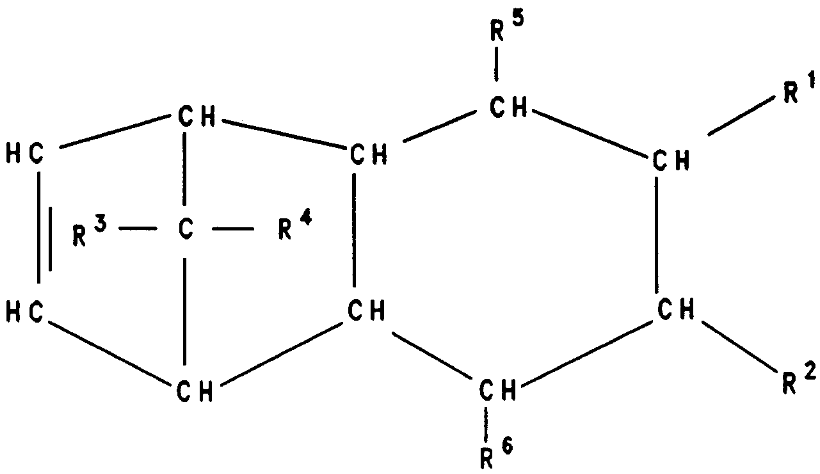

(V)

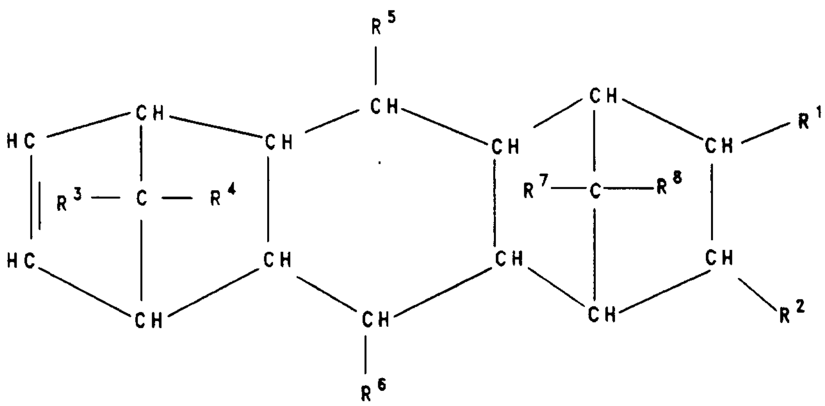

(VI)

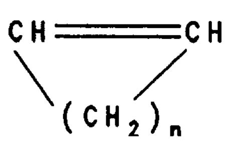

(VII)

In den Formeln (I) bis (VI) bedeuten die Reste

$R^1$, $R^2$, $R^3$, $R^4$, $R^5$, $R^6$, $R^7$ und $R^8$ gleiche oder verschiedene Reste, ausgewählt aus Wasserstoff und einem $C_1$-$C_8$-Alkylrest.

Der Index n in dem Cycloolefin der Formel (VII) bedeutet eine ganze Zahl von 2 bis 10.

In den verschiedenen Formeln können gleiche Reste $R^i$ eine unterschiedliche Bedeutung haben. Die Cycloolefinpolymere können neben den Struktureinheiten, die von mindestens einem Monomeren der Formeln (I) bis (VII) abgeleitet sind, weitere Struktureinheiten enthalten, die sich von mindestens einem acyclischen 1-Olefin der Formel (VIII)

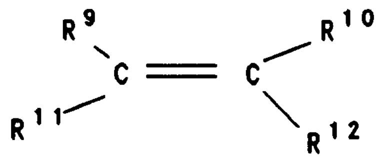

(VIII)

ableiten.

In der allgemeinen Formel (VIII) bedeuten die Reste $R^9$, $R^{10}$, $R^{11}$ und $R^{12}$ gleiche oder verschiedene Reste, ausgewählt aus Wasserstoff und $C_1$-$C_8$-Alkylresten oder $C_6$-$C_{12}$-Arylresten. Vorzugsweise ist $R^{10}$, $R^{11}$ und $R^{12}$ Wasserstoff.

Bevorzugte Comonomere der Formel (VIII) sind Ethylen oder Propylen. Es werden insbesondere Copolymere aus polycyclischen Olefinen der Formeln (I) oder (III), und den acyclischen Olefinen der Formel (VIII), eingesetzt. Besonders bevorzugte Cycloolefine sind Norbornen und Tetracyclododecen, die durch $C_1$-$C_6$-Alkyl substituiert sein können, wobei Ethylen-Norbornen-Copolymere von besonderer Bedeutung sind.

Die besonders bevorzugt eingesetzten Ethylen-Norbornen-Copolymere enthalten 25 bis 70 Mol-% Norbornen und 30 bis 75 Mol-% Ethylen.

Von den monocyclischen Olefinen der Formel (VII) ist Cyclopenten, das substituiert sein kann, bevorzugt.

Als polycyclische Olefine der allgemeinen Formeln (I) bis (VI), polycyclische Olefine der Formel (VII) und offenkettige Olefine der Formel (VIII) sind auch Gemische zweier oder mehrerer Olefine des jeweiligen Typs verwendbar. Zur Herstellung der erfindungsgemäßen glasfaserverstärkten Materialien können also sowohl Cycloolefin-Homopolymere als auch Cycloolefin-Copolymere wie Bi-, Ter- und Multipolymere eingesetzt werden.

Die unter Öffnung der Doppelbindung verlaufenden Cycloolefinpolymerisationen können mit neueren Katalysatorsystemen (EP-A-0407870, EP-A-0203799), als auch mit einem klassischen Ziegler-Katalysatorsystem katalysiert werden (DD-A-222317, DD-A-239409).

Die Cycloolefinhomo- und copolymere, die Struktureinheiten abgeleitet von Monomeren der Formeln (I) bis (VI) oder (VII) enthalten, werden bevorzugt mit Hilfe eines homogenen Katalysators, bestehend aus einem Metallocen, dessen Zentralatom ein Metall aus der Gruppe Titan, Zirkon, Hafnium, Vanadium, Niob und Tantal ist, welches mit zwei miteinander verbrückten ein- oder mehrkernigen Liganden eine Sandwichstruktur bildet, und einem Aluminoxan, hergestellt. Die Darstellung des verbrückten Metallocen erfolgt nach einem bekannten Reaktionsschema (vgl. J. Organomet. Chem. 288 (1985) 63 bis 67 und EP-A-320762). Das als Cokatalysator fungierende Aluminoxan ist nach verschiedenen Methoden erhältlich (vgl. S. Pasynkiewicz, Polyhedron 9 (1990) 429). Sowohl die Struktur als auch die Polymerisation dieser Cycloolefine ist ausführlich in EP-A-0407870, EP-A-0485893, EP-A-0501370 und EP-A-0503422 beschrieben.

Bevorzugt werden Cycloolefinpolymere mit einer Viskositätszahl größer 20 $cm^3/g$ (gemessen in Dekalin bei 135 °C in einer Konzentration von 0,1 g/100 ml) verarbeitet.

Glasfasern werden in der Kunststoffindustrie meist als Verstärkungsmaterialien eingesetzt. Technische Glasfasern besitzen Schlichten, die als Glasfilamente gegen mechanische Beanspruchung schützen und Spinnfäden aus Glas locker miteinander verbinden.

Hauptbestandteile von Schlichten sind gemäß WO 86/01811 filmbildende Polymere und Gleitmittel sowie bei Bedarf Haftvermittler und sonstige Additive. Die filmbildenden Polymere sind in wäßrigem Medium dispergierbar, löslich oder emulgierbar, gleichfalls das Reaktionsprodukt mit Prozeßhilfsmitteln. Der Gehalt an Wasser in der wäßrig-chemischen Kombination der Schlichtebestandteile ist so ausgelegt, daß diese den effektiven Gehalt an Feststoff auf der Glasfaser ergeben.

Es wurde nun beobachtet, daß es zur Herstellung von transparentem, glasfaserverstärktem Cycloolefinpolymer-Material vorteilhaft ist, die eingesetzten Glasfasern vorher zu entschlichten. Dies liegt möglicherweise daran, daß die unterschiedlichen Bestandteile einer Schlichte einerseits und die Glasfaser andererseits meist stark unterschiedliche Brechungsindizes aufweisen, was dazu führt, daß die Lichtdurchlässigkeit eines glasfaserverstärkten Formkörpers stark vermindert wird. Es ist beispielsweise aus Int. Encyclopedia of Composites (Verlag Chemie, New York) Bd. 6, S. 225 bekannt, daß man transparente Verbundwerkstoffe erhalten kann, wenn die Brechungsindizes von anorganischen Gläsern und Polymeren übereinstimmen.

Vorzugsweise wird die Glasfaser zur Entfernung der Schlichte auf 500 °C in einer Sauerstoff enthaltenden Atmosphäre erhitzt. Dabei werden sämtliche organischen Materialien, die vom Hersteller auf die Glasfaser aufgebracht wurden, entfernt.

Die Erfindung betrifft ferner ein Verfahren zur Herstellung eines glasfaserverstärkten Cycloolefinpolymer-Materials, wobei man Glasfasern und ein Cycloolefinpolymer in einem Mischungsverhältnis Glasfaser/Cycloolefinpolymer von 1:99 bis 99:1 vermischt. Dieses Verfahren ist dadurch gekennzeichnet, daß man handelsübliche Glasfasern, deren Glas einen Brechungsindex im Bereich von 1,510 bis 1,560 aufweist, von Schlichte befreit und dann mit einem Cycloolefinpolymer vermischt. Das Vermischen kann auch dadurch erfolgen, daß man eine Lösung des Cycloolefinpolymeren in einem organischen Lösemittel mit den Glasfasern vermischt und man das Lösungsmittel durch Verdunsten entfernt oder man das Gemisch in einen Überschuß an einem zweiten Lösungsmittel gießt, das mit dem ersten Lösungsmittel mischbar ist, in dem aber das Cycloolefinpolymer unlöslich ist, so daß das Cycloolefinpolymer auf den Glasfasern niedergeschlagen wird. Das Vermischen kann ferner dadurch erfolgen, daß man eine Schmelze des Cycloolefinpolymeren mit der Glasfaser vermischt.

Aus dem erfindungsgemäßen Cycloolefinpolymer-Material lassen sich durch Schmelzen oder Verpressen bei erhöhter Temperatur, z.B. Injection Moulding, Formkörper herstellen.

Bei den zum Stand der Technik gehörenden Materialien aus glasfaserverstärktem Kunststoff tritt das Problem auf, daß die Glasfasern am Polymer - insbesondere an unpolaren Polymeren - manchmal schlecht haften und daher die mechanische Beständigkeit von Formkörpern nicht optimal ist. Man hat daher in diesem Zusammenhang zur besseren Kopplung bereits Haftvermittler eingesetzt. Diese Haftvermittler werden entweder mit der wäßrig-chemischen Behandlung zur Erzeugung von Schlichte auf die Glasfaser aufgebracht oder nachfolgend in einem separaten Schritt über Lösungen.

Außerdem ist es möglich, die Haftvermittler der Schmelze der Polymeren einzuverleiben. Diese Methode besitzt den Vorteil, daß keine Lösungen verarbeitet werden müssen. Die Haftvermittler können auch, wie bei den sonstigen Additiven möglich, durch Bereitstellung von Masterbatches, die das Verdünnungsprinzip ausnutzen, vorteilhaft in den Composite eingearbeitet werden.

Dieser Zusatz von Haftvermittler ist auch bei den beiden erfindungsgemäßen Verfahren zur Herstellung von glasfaserverstärkten Kunststoffen von Vorteil. Man kann daher erfindungsgemäß sowohl einen Polymerschmelz-Haftvermittler zusetzen oder die Glasfaser mit Haftvermittler überziehen.

Man kann den Haftvermittler - sowohl erfindungsgemäß wie nach dem Stand der Technik - auswählen aus der Gruppe der Vinylsilane, Methacrylsilane, Aminosilane, Epoxidsilane und der Methacrylat-Chromchlorid-Komplexe.

Bevorzugt sind organische Haftvermittler auf Polymerbasis, insbesondere die aus einem funktionalisierten Cycloolefinpolymer bestehen. Vorteilhafterweise wird dabei jenes Cycloolefinpolymer funktionalisiert, das Bestandteil des Verbundmaterials ist.

Vorzugsweise wird das funktionalisierte Cycloolefinpolymere durch Pfropfung eines Cycloolefinpolymeren mit einem polaren Monomeren hergestellt. Besonders vorteilhaft ist es, wenn das bei der Pfropfung verwendete polare Monomere ausgewählt wird aus der Gruppe $\alpha$-$\beta$-ungesättigte Carbonsäuren, $\alpha$-$\beta$-ungesättigte Carbonsäurederivate, organische Siliciumverbindungen mit olefinisch ungesättigter und hydrolysierbarer Gruppe, olefinisch ungesättigte Verbindungen mit Hydroxylgruppen und olefinisch ungesättigte Epoxymonomere.

Cycloolefinpolymer-Composites mit solchen Cycloolefinpolymer-Haftvermittlern zeigen neben der hohen Lichtdurchlässigkeit, größer 40 % nach obiger Definition, zusätzlich gute mechanische Eigenschaften. Diese Haftvermittler können nach obigen Verfahren aufgebracht bzw. eingearbeitet werden. Die Einarbeitung über Schmelze ist hierbei besonders bevorzugt.

Die Erfindung betrifft ferner einen Haftvermittler, hergestellt durch Pfropfung eines Cycloolefinpolymers mit einem polaren Monomer, mit einem Gehalt an gepfropftem polaren Monomeren von 0,01 bis 50 Gew.-%.

Vorzugsweise besteht die eingesetzte Glasfaser aus Magnesium-Alumo-Silicat mit einem Brechungsindex von 1,510 bis 1,560, insbesondere aus 60 bis 68 Gew.-% $SiO_2$, 23 bis 29 Gew.-% $Al_2O_3$ und 8 bis 12 Gew.-% MgO. In diesem Bereich ist die Anpassung der Brechungsindizes Glasfaser/Cycloolefinpolymer besonders leicht. Die erhaltenen Produkte sind besonders wertvoll.

Die Erfindung wird durch die Beispiele näher erläutert.

Es wurden folgende Polymere nach Standardmethoden hergestellt:

Cycloolefincopolymer A1 und A2 [COC A1, A2]

A) Darstellung von rac-Dimethylsilyl-bis-(1-indenyl)-zirkon-dichlorid (Metallocen A)

Alle nachfolgenden Arbeitsoperationen sind in Inertgasatmosphäre unter Verwendung absolutierter Lösemittel durchgeführt worden (Schlenk-Technik).

Eine Lösung von 30 g (0,23 mol) über Aluminiumoxid filtriertem Inden (techn. 91%) in 200 $cm^3$ Diethylether wurde unter Eiskühlung mit 80 $cm^3$ (0,20 mol) einer 2,5-molaren Lösung von n-Butyllithium in Hexan versetzt. Man rührte den Ansatz noch 15 Minuten bei Raumtemperatur und gab die orangefarbene Lösung über eine Kanüle innerhalb 2 Stunden zu einer Lösung von 13,0 g (0,10 mol) Dimethyldichlorsilan (99%) in 30 $cm^3$ Diethylether. Die orangefarbene Suspension wurde über Nacht gerührt und dreimal mit 100 bis 150 $cm^3$ Wasser ausgeschüttelt. Die gelbe organische Phase wurde zweimal über Natriumsulfat getrocknet und im Rotationsverdampfer eingedampft. Das verbleibende orange Öl wurde 4 bis 5 Stunden im Ölpumpenvakuum bei 40 °C gehalten und von überschüssigem Inden befreit, wobei ein weißer Niederschlag ausfiel. Durch Zugabe von 40 $cm^3$ Methanol und Kristallisation bei -35 °C ließen sich insgesamt 20,4 g (71%) der Verbindung $(CH_3)_2Si(Ind)_2$ als weißes bis beiges Pulver isolieren. Fp. 79 bis 81 °C (2 Diastereomere).

Eine Lösung von 16,8 g (58,2 mmol) $(CH_3)_2Si(Ind)_2$ in 120 $cm^3$ THF wurde bei Raumtemperatur langsam mit 46,5 $cm^3$ (116,1 mmol) einer 2,5-molaren Hexanlösung von Butyllithium versetzt. Eine Stunde nach Beendigung der Zugabe wurde die tiefrote Lösung innerhalb 4 bis 6 Stunden zu einer Suspension von 21,9 g (58,2 mmol) $ZrCl_4$*2THF in 180 $cm^3$ THF zugetropft. Nach 2 Stunden Rühren wurde der orange Niederschlag über eine Glasfritte abgesaugt und aus $CH_2Cl_2$ umkristallisiert. Man erhielt 3,1 g (11 %) rac-$(CH_3)_2Si(Ind)_2ZrCl_2$ in Form oranger Kristalle, die sich ab 200 °C allmählich zersetzen. Korrekte Elementaranalysen. Das Massenspektrum zeigte $M^+$ = 448.$^1$H-NMR-Spektrum ($CDCl_3$): 7,04 bis 7,60 (m,8,arom.H), 6,90 (dd,2,beta-Ind H), 6,08 (d,2,alpha-Ind H), 1,12 (s,6,$SiCH_3$).

B) Herstellung von COC A1

Ein sauberer und trockener 10-$dm^3$-Polymerisationsreaktor mit Rührer wurde mit Stickstoff und dann mit Ethylen gespült. Anschließend wurden 0,75 l Exxsol und 214 g Norbornenschmelze im Polymerisationsreaktor vorgelegt. Unter Rühren wurde der Reaktor auf eine Temperatur von 70 °C gebracht und 3 bar Ethylen aufgedrückt.

Danach wurden 20 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 3 bar gehalten wurde. Parallel dazu wurden 60 mg rac-Dimethylsilyl-bis-(1-indenyl)-zirkondichlorid in 20 $cm^3$ toluolischer Methylaluminoxanlösung (Konzentration und Qualität siehe oben) gelöst und durch 15-minütiges Stehenlassen voraktiviert. Dann wurde die Lösung des Katalysators (Metallocen und Methylaluminoxan) in den Reaktor dosiert. Unter Rühren wurde dann 90 Minuten bei 70 °C polymerisiert, wobei der Ethylendruck durch Nachdosieren bei 3 bar gehalten wurde. Dann wurde der Reaktorinhalt in ein Becherglas abgelassen, und der Katalysator durch Zugabe von 20 ml Isopropanol zersetzt. Die klare Lösung wurde in Aceton ausgefällt, 10 Minuten gerührt und dann der polymere Feststoff abfiltriert.

Um restliches Lösemittel aus dem Polymer zu entfernen, wurde das Polymer noch zweimal mit Aceton ausgerührt und abfiltriert. Die Trocknung erfolgte bei 80 °C unter Vakuum innerhalb 15 Stunden.

Es wurde eine Produktmenge von 12 g erhalten.

Herstellung von COC A2

Ein sauberer und trockener 75-$dm^3$-Polymerisationsreaktor mit Rührer wurde mit Stickstoff und dann mit Ethylen gespült. Anschließend wurden 20550 g Norbornenschmelze im Polymerisationsreaktor vorgelegt. Unter Rühren wurde der Reaktor auf eine Temperatur von 70 °C gebracht und 5 bar Ethylen aufgedrückt.

Danach wurden 1000 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 5 bar gehalten wurde. Parallel dazu wurden 3000 mg rac-Dimethylsilylbis-(1-indenyl)-zirkondichlorid in 1000 $cm^3$ toluolischer Methylaluminoxanlösung (Konzentration und Qualität siehe oben) gelöst und durch 15-minütiges Stehenlassen voraktiviert. Dann wurde die Lösung des Katalysators (Metallocen und Methylaluminoxan) in den Reaktor dosiert. Unter Rühren wurde dann 130 Minuten bei 70 °C polymerisiert, wobei der Ethylendruck durch Nachdosieren bei 5 bar gehalten wurde. Dann wurde der Reaktorinhalt schnell in ein Rührgefäß abgelassen, in dem 40 l ®Exxsol 100 und 110 g ®Celite J 100 sowie 200 $cm^3$ E-Wasser bei 70 °C vorgelegt waren. Die Mischung wurde filtriert, so daß das Filterhilfsmittel (Celite J 100) zurückgehalten wurde und eine klare Polymerlösung als Filtrat resultierte. Die klare Lösung wurde in Aceton ausgefällt, 10 Minuten gerührt und dann der polymere Feststoff abfiltriert.

Um restliches Lösungsmittel aus dem Polymer zu entfernen, wurde das Polymer noch zweimal mit Aceton ausgerührt und abfiltriert. Die Trocknung erfolgte bei 80 °C unter Vakuum innerhalb 15 Stunden.

Es wurde eine Produktmenge von 6200 g erhalten.

Herstellung der Cycloolefincopolymere A3 und A4

A) Darstellung von Diphenylmethylen(9-fluorenyl)-cyclopentadienylzirkondichlorid - (Metallocen B)

Alle nachfolgenden Arbeitsoperationen sind in Inertgasatmosphäre unter Verwendung absolutierter Lösemittel durchgeführt worden (Schlenk-Technik).

Eine Lösung von 5,10 g (30,7 mmol) Fluoren in 60 $cm^3$ THF wurde bei Raumtemperatur mit 12,3 $cm^3$ (30,7 mmol) einer 2,5 molaren Hexan-Lösung von n-Butyllithium langsam versetzt. Nach 40 Minuten wurde die orange Lösung mit 7,07 g (30,7 mmol) Diphenylfulven versetzt und über Nacht gerührt. Zur dunkelroten Lösung wurden 60 $cm^3$ Wasser zugesetzt, wobei sich die Lösung gelb färbte, und die Lösung ausgeethert wurde. Die über $MgSO_4$ getrocknete Etherphase wurde eingeengt und bei -35 °C der Kristallisation überlassen. Man erhielt 5,1 g (42%) 1,1-Cyclopentadienyl-(9-fluorenyl)-diphenylmethan als beiges Pulver.

2,0 g (5,0 mmol) der Verbindung wurden in 20 $cm^3$ THF gelöst und bei 0 °C mit 6,4 $cm^3$ (10 mmol) einer 1,6 molaren Lösung von Butyllithium in Hexan versetzt. Nach 15-minütigem Rühren bei Raumtemperatur wurde das Lösungsmittel abgezogen, der rote Rückstand im Ölpumpenvakuum getrocknet und mehrmals mit Hexan gewaschen. Nach dem Trocknen im Ölpumpenvakuum wurde das rote Pulver bei -78 °C zu einer Suspension von 1,16 g (5,0 mmol) $ZrCl_4$ gegeben. Nach dem langsamen Aufwärmen wurde der Ansatz noch 2 Stunden bei Raumtemperatur gerührt. Die rosafarbene Suspension wurde über eine G3-Fritte filtriert. Der rosarote Rückstand wurde mit 20 $cm^3$ $CH_2Cl_2$ gewaschen, im Ölpumpenvakuum getrocknet und mit 120 $cm^3$ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35 °C der Kristallisation überlassen. Aus $CH_2Cl_2$ kristallisieren weitere 0,45 g des Komplexes.

Gesamtausbeute 1,0 g (36%). Korrekte Elementaranalysen. Das Massenspektrum zeigte $M^+$ = 5566. $^1$NMR-Spektrum (100 MHz, $CDCl_3$): 6,90 bis 8,25 (m,16, Flu-H, Ph-H), 6,40 (m, 2, Ph-H), 6,37 (t,2-Cp-H), 5,80 (t, 2- Cp-H).

B) Herstellung von COC A3

Ein sauberer und trockener 10 $dm^3$-Polymerisationsreaktor mit Rührer wurde mit Stickstoff und dann mit Ethylen gespült. Anschließend wurden 560 g Norbornenschmelze im Polymerisationsreaktor vorgelegt. Unter Rühren wurde der Reaktor auf eine Temperatur von 70 °C gebracht und 6 bar Ethylen aufgedrückt.

Danach wurden 20 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 6 bar gehalten wurde. Parallel dazu wurden 10 mg Diphenylmethylen-(9-fluorenyl)-cyclopentadienyl-zirkondichlorid in 20 $cm^3$ toluolischer Methylaluminoxanlösung (Konzentration und Qualität siehe oben) gelöst und durch 15-minütiges Stehenlassen voraktiviert. Dann wurde die Lösung des Katalysators (Metallocen und Methylaluminoxan) in den Reaktor dosiert. Unter Rühren wurde dann 30 Minuten bei 70 °C polymerisiert, wobei der Ethylendruck durch Nachdosieren bei 6 bar gehalten wurde. Dann wurde der Reaktorinhalt in ein Becherglas abgelassen, und der Katalysator durch Zugabe von 20 ml Isopropanol zersetzt. Die klare Lösung wurde in Aceton ausgefällt, 10 Minuten gerührt und dann der polymere Feststoff abfiltriert.

Um restliches Lösemittel aus dem Polymer zu entfernen, wurde das Polymer noch zweimal mit Aceton ausgerührt und abfiltriert. Die Trocknung erfolgte bei 80 °C unter Vakuum innerhalb 15 Stunden.

Es wurde eine Produktmenge von 40 g erhalten.

Herstellung von COC A4

Ein sauberer und trockener 75 $dm^3$-Polymerisationsreaktor mit Rührer wurde mit Stickstoff und dann mit Ethylen gespült und mit 22000 g Norbornenschmelze (Nb) gefüllt. Unter Rühren wurde dann der Reaktor auf eine Temperatur von 70 °C gebracht und 6 bar Ethylen aufgedrückt.

Danach wurden 580 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 6 bar gehalten wurde. Parallel

dazu wurden 500 mg Diphenylmethylen-(9-fluorenyl)-cyclopentadienyl-zirkondichloridin 500 $cm^3$ toluolischer Methylaluminoxanlösung (Konzentration und Qualität siehe oben) gelöst und durch 15-minütiges Stehenlassen voraktiviert. Dann wurde die Lösung des Komplexes (Kat.-Lösung) in den Reaktor dosiert (um das Molekulargewicht zu reduzieren, wurden unmittelbar nach der Dosierung des Katalysators 1350 ml Wasserstoff über eine Schleuse dem Reaktionsgefäß zugeführt). Unter Rühren (750 Umdrehungen/Minute) wurde dann 140 Minuten bei 70 °C polymerisiert, wobei der Ethylendruck durch Nachdosieren bei 6 bar gehalten wurde. Dann wurde der Reaktorinhalt schnell in ein Rührgefäß abgelassen, in dem 200 $cm^3$ Isopropanol (als Stopper) vorgelegt waren. Die Mischung wurde in Aceton ausgefällt, 10 Minuten gerührt und dann der suspendierte polymere Feststoff abfiltriert. Das abfiltrierte Polymer wurde dann mit einer Mischung aus zwei Teilen 3 n HCl und einem Teil Ethanol versetzt und 2 Stunden gerührt. Das Polymer wurde dann erneut abfiltriert, mit Wasser neutral gewaschen und bei 80 °C und 0,2 bar 15 Stunden getrocknet.

Es wurde eine Produktmenge von 4400 g erhalten.

Die physikalischen Kenndaten der Cycloolefincopolymere COC A1, COC A2, COC A3 und COC A4 sind der Tabelle 1 zu entnehmen.

Tabelle 1

| Cyclo-olefin-copolymer | Einbau* von Ethylen [Mol%] | Norbornen [Mol%] | Tg [°C] | VZ [ml/g] | $n_D^{20}$ | <Mw> x10-4 [g/mol] | <Mn> x10-4 [g/mol] | <Mw> / <Mn> |
|---|---|---|---|---|---|---|---|---|
| A1 | 56 | 44 | 133 | 70 | 1,5345 | - | - | - |
| A2 | 47 | 53 | 176 | 90 | 1,5358 | 9,4 | 4,9 | 1,9 |
| A3 | 46 | 54 | 181 | 108 | 1,5367 | - | - | - |
| A4 | 45 | 55 | 183 | 106 | 1,5370 | 14,8 | 4,3 | 3,4 |

* ermittelt durch $^{13}C$-Kernmagnetische Resonanzspektroskopie

Tg: Glastemperatur bestimmt mit DSC 7 (Differential-Scanning-Calorimeter)-Aufheiz- und Abkühlgeschwindigkeit: 20°C/Min.

VZ: Viskositätszahl gemäß DIN 53728 ermittelt

$n_D^{20}$: Brechungsindex (Zeiss Abbé-Refraktometer Typ 64165)

GPC: <Mw>, <Mn>; 150-C ALC Millipore Waters Chromatograph Säulensatz: 4 Shodex-Säulen AT-80 M/S
Lösemittel: o-Dichlorbenzol bei 135°C
Durchfluß: 0,5 ml/Min., Konzentration 0,1 g/dl
RI-Detektor, Kalibrierung: Polyethylen (714 PE)

Herstellung von funktionalisiertem Cycloolefincopolymer COC A4-Material

1. Herstellung von mit Maleinsäureanhydrid gepfropftem COC A4 Haftvermittler

a.) Maleinsäureanhydrid COC A4-P1

Einen sauberen und trockenen 2 l Dreihalskolben mit KPG-Rührer und Kühler befüllte man mit Argon. Im Argongegenstrom wurden 50 g (89,3 g/l) COC A4, 500 ml wasserfreies Toluol eingebracht und vollständig gelöst. Danach wurden im Inertgasgegenstrom 20,72 g (377,5 mmol/l) Maleinsäureanhydrid (MSA, 99%ig) zugegeben und gelöst, bevor 4,94 g (32,64 mmol/l) Dicumylperoxid, gelöst in 60 ml wasserfreiem Toluol, gleichfalls im Argongegenstrom zugegeben wurden. Die Reaktionslösung wurde in ein auf 110 ° C vortemperiertes Ölbad gegeben und mit einem KPG-Rührer kräftig gerührt.

Nach 5 Stunden Reaktionszeit wurde die Polymerlösung mit 250 ml Toluol verdünnt und in 4 l Aceton ausgefällt. Zur Aufarbeitung, d.h. Reinigung des Polymeren, wurde dieses dreimal in Aceton umgefällt, wobei nach Trocknung bei 130 ° C (72h/Ölpumpenvakuum) 45,3 g MSA-gepfropftes Cycloolefincopolymer A4 (A4-P1) erhalten wurde.

FT-IR [$cm^{-1}$]: 1865 ss / 1790 ss (C = O, Anhydrid)

b.) Maleinsäureanhydrid COC A4-P2

Einen sauberen und trockenen 2 l Dreihalskolben mit KPG-Rührer und Kühler befüllte man mit Argon. Im Argongegenstrom wurden 50 g (108,4 g/l) COC A4, 400 ml Toluol (absolutiert) eingebracht und vollständig gelöst. Danach wurden im Inertgasgegenstrom 20,0 g (422,1 mmol/l) Maleinsäureanhydrid (MSA, 99%ig) zugegeben und gelöst, bevor 7,0 g (38,06 mmol/l) Dilauroylperoxid, gelöst in 65 ml wasserfreiem Toluol, gleichfalls im Argongegenstrom zugegeben wurden. Die Reaktionslösung wurde in ein auf 80 ° C vortemperiertes Ölbad gegeben und mit einem KPG-Rührer kräftig gerührt.

Nach 5 Stunden Reaktionszeit wurde die Polymerlösung mit 250 ml Toluol verdünnt und in 4 l Aceton ausgefällt. Die Aufarbeitung erfolgte wie bei COC A4-P1.

Ausbeute: 48,7 g

c.) Maleinsäureanhydrid A4-P3

A4-P3 ist analog A4-P2 hergestellt worden, wobei der Ansatz der Tabelle 2 zu entnehmen ist.

d.) Maleinsäureanhydrid A4-P4

A4-P4 ist analog A4-P1 hergestellt worden, wobei der Ansatz der Tabelle 2 zu entnehmen ist.

Tabelle 2

| Probe Masse | abs. Toluol [ml] | Maleinsäureanhydrid [g] \ (mmol/l) | Peroxid | | Ausbeute |
|---|---|---|---|---|---|
| | | | Art | [g] (mmol/l) | |
| A4-P3 50 (90,9) | 550 | 13,5 (250,3) | Dilauroylperoxid | 1,69 (7,72) | 46,8 |
| A4-P4 50 (108,7) | 460 | 9,8 (210,1) | Dicumylperoxid | 0,27 (2,17) | 47,5 |

Die physikalischen Kenndaten der funktionalisierten Cycloolefincopolymere COC A4-P1, A4-P2, A4-P3 und A4-P4 sind der Tabelle 3 zu entnehmen.

Tabelle 3

| Probe COC | Gehalt MSA* [Gew.%] | VZ [ml/g] | <Mw> $10^{-4}$ [g/mol] | <Mn> $10^{-4}$ [g/mol] | <Mw> / <Mn> |
|---|---|---|---|---|---|
| A4-P1 | 3,70 | 83,8 | 7,93 | 1,69 | 4,7 |
| A4-P2 | 1,58 | 85,7 | 14,70 | 4,18 | 3,5 |
| A4-P3 | 0,81 | 89,2 | 15,75 | 5,05 | 3,1 |
| A4-P4 | 0,19 | 91,6 | 18,85 | 3,95 | 4,8 |

* Maleinsäureanhydridgehalt über Titration bestimmt

VZ: Viskositätszahl gemäß DIN 53728 ermittelt

GPC: <Mw>, <Mn>; 150-C ALC Millipore Waters Chromatograph
Säulensatz: 4 Shodex-Säulen AT-80 M/S
Lösemittel: o-Dichlorbenzol bei 135°C
Durchfluß: 0,5 ml/Min., Konzentration 0,1 g/dl
RI-Detektor, Kalibrierung: Polyethylen (714 PE)

2. Herstellung von mit Methacrylsäure, Triethoxyvinylsilan und Glycidylmethacrylat gepfropftem COC A4-Haftvermittler

a.) Methacrylsäure A4-P5

Einen sauberen und trockenen 500 ml Zweihalskolben mit Magnetrührer und Kühler befüllte man mit Argon.
Im Argongegenstrom wurden 20 g (108,4 g/l) COC A4, 140 ml Toluol (absolutiert) eingebracht und vollständig gelöst. Danach wurden im Inertgasgegenstrom 7,02 g (442,0 mmol/l) Methacrylsäure (destilliert) zugegeben und gelöst, bevor 2,8 g (38,06 mmol/l) Dilauroylperoxid in 44,5 ml Toluol gelöst gleichfalls im Argongegenstrom zugegeben wurden.

Die Reaktionslösung wurde in ein auf 80°C vortemperiertes Ölbad gegeben und kräftig gerührt. Nach 5 Stunden Reaktionszeit wurde die Polymerlösung mit 100 ml Toluol verdünnt und in 2 l Aceton ausgefällt. Zur Aufarbeitung, d.h. Reinigung des Polymeren wurde dieses dreimal in Aceton umgefällt, wobei nach Trocknung bei 130°C (72h / Ölpumpenvakuum) 17,8 g Methacrylsäuregepfropftes Cycloolefincopolymer A4 (A4-P5) erhalten wurde.

FT-IR [$cm^{-1}$]: zusätzliche Banden 1705 ss, 1805 ss (C=O-Banden)

Methacrylsäuregehalt: Titration 0,24 Gew.-%

b.) Triethoxyvinylsilan A4-P6

A4-P6 ist analog A4-P5 hergestellt worden, wobei der Ansatz der Tabelle 4 zu entnehmen ist.

FT-IR [$cm^{-1}$]: zusätzliche Banden 806 s (Si-(CH)), 1080 s (Si-O-)

Triethoxyvinylsilangehalt: Elementaranalyse auf Sauerstoff 6,98 Gew.%.

c.) Glycidylmethacrylat A4-P7

A4-P7 ist analog A4-P5 hergestellt worden, wobei der Ansatz der Tabelle 4 zu entnehmen ist.
FT-IR [$cm^{-1}$]: zusätzliche Banden 1650 s, 1730 ss (C = O-Banden)
Glycidylmethacrylat: Elementaranalyse auf Sauerstoff > 0,3 Gew.-%.

Tabelle 4

| Probe | Masse [g] (g/l) | abs. Toluol [ml] | Monomer | | Dilauroylperoxid [g]\ (mmol/l) | Ausbeute [g] |
|---|---|---|---|---|---|---|
| | | | Art | [g] (mol/l) | | |
| A4-P6 | 20 (108,4) | 184,5 | Triethoxyvinylsilan | 15,52 (442,0) | 2,80 (38,06) | 14,9 |
| A4-P7 | 20 (108,4) | 184,5 | Glycidylmethacrylat | 11,54 (440,0) | 2,40 (32,60) | 16,1 |

Die physikalischen Kenndaten der funktionalisierten Cycloolefincopolymere COC A4-P5, A4-P6 und A4-P7 sind der Tabelle 5 zu entnehmen.

Tabelle 5

| Probe COC | VZ [ml/g] | <Mw> $10^{-4}$ [g/mol] | <Mn> $10^{-4}$ [g/mol] | <Mw> / <Mn> |
|---|---|---|---|---|
| A4-P5 | - | 12,65 | 4,06 | 3,1 |
| A4-P6 | 109,5 | 18,30 | 4,10 | 4,5 |
| A4-P7 | - | 15,60 | 4,06 | 3,8 |

VZ: Viskositätszahl gemäß DIN 53728 ermittelt

GPC: <Mw>, <Mn>; 150-C ALC Millipore Waters Chromatograph

Säulensatz: 4 Shodex-Säulen AT-80 M/S
Lösemittel: o-Dichlorbenzol bei 135°C
Durchfluß: 0,5 ml/Min., Konzentration 0,1 g/dl
RI-Detektor, Kalibrierung: Polyethylen (714 PE)

Bei der eingesetzten Glasfaser GF1 handelt es sich um Magnesium-Alumo-Silicatglas, Alkaligehalt < 0,5%.

Die Richtwerte der Glaszusammensetzung sind:

| Masseanteil in % * | S-Glas |
|---|---|
| $SiO_2$ | 64 |
| $Al_2O_3$ | 26 |
| MgO | 10 |
| Dichte (g/cm³) | 2,49 |

* Masseanteil unter 0,5 % nicht erfaßt.

Bei der eingesetzten Glasfaser GF2 handelt es sich um Alumo-Bor-silicatglas, Alkaligehalt < 1 %.

Die Richtwerte der Glaszusammensetzung sind:

| Masseanteil in % * | E-Glas |
|---|---|
| $SiO_2$ | 53 - 55 |
| $Al_2O_3$ | 14 - 15 |
| CaO, MgO | 20 - 24 |
| $B_2O_3$ | 6 - 9 |
| $K_2O$, $Na_2O$ | < 1 |
| ---- | ------- |
| spez. Dichte (g/cm³) | 2,61 |

* Masseanteile unter 0,6 % nicht erfaßt.

Charakteristika der eingesetzten Glasfasern GF1 und GF2:

Bei der eingesetzten Glasfaser GF1 handelt es sich um eine ®Owens-Corning S-2 Glasfaser (Fa. Owens-Corning Fiberglas Deutschland GmbH (Wiesbaden)), die entschlichtet und geschnitten wurde (GF1a, GF1b).

Die Filamentcharakteristika sind:

| | Wert | Einheit |
|---|---|---|
| Faserdurchmesser | 9 | µm |
| Fadenlänge GF1a | 6,5 | mm |
| Fadenlänge GF1b | 180 | µm |
| Glühverlust | 0,23 ± 0,08 | % |
| Feuchtigkeitsaufnahme | 0,05 max | % |

Bei der eingesetzten Glasfaser GF2 handelt es sich um eine ®Vitrofil CP 756 (Fa. Vitrofil S.p.A., Milano), die entschlichtet wurde.

Die Filamentcharakteristika sind:

| | Wert | Einheit |
|---|---|---|
| Faserdurchmesser | 13 | µm |
| Fadenlänge | 4,5 | mm |
| Glühverlust | 0,80 ± 0,10 | % |
| Feuchtigkeitsaufnahme | 0,08 max. | % |

Die Glasfasern wurden durch 3-stündige thermische Behandlung (550 °C) von sämtlichen organischen Substanzen befreit (entschlichtet).

Die so entschlichteten Glasfasern sind in die Versuche der Lichtdurchlässigkeit eingegangen.

Die Brechungsindizes der eingesetzten Glasfasern sind Tabelle 6 zu entnehmen:

Tabelle 6

| Glasfaser | $n_D^{20}$ |
|---|---|
| GF1 | 1,5234 (± 0,0003) |
| GF2 | 1,5599 |

Für die mechanischen Eigenschaften der Cycloolefinpolymer-Composites mit zusätzlichem Haftvermittler wurden funktionalisierte Cycloolefinpolymere bzw. zum Vergleich ein Maleinsäureanhydrid gepfropftes Polypropylen [®Hostaprime HC 5 (Produktnummer HOAA 155) Spezifikation > 4 Gew.% Maleinsäureanhydrid; von der Fa. Hoechst AG, Frankfurt am Main, kommerziell erwerbbar] eingesetzt.

Beispiel A

Auf einer optischen Bank wurden ein Helium-Neon-Laser (Spectra-Physics Model 155A-SL; Wellenlänge 632,8 nm; 0,5 mV) und eine Mattscheibe mit Fotosensor installiert. Der Fotosensor hatte eine lichtempfindliche Fläche von 5,3 x 5,0 mm. Die Mattscheibe bestand aus 1,7 mm dickem Glas und hatte eine 0,6 mm dicke Milchglas-Beschichtung. Der Versuchsaufbau wird durch Fig. 1 illustriert.

Herstellung der Cycloolefincopolymer-Composites:

12,5 g COC A1 (A2, A3) wurden in 450 ml Toluol gelöst und 4,17 g Glasfaser GF1a hinzugegeben, wobei auf eine möglichst homogene Dispergierung geachtet wurde. Danach wurde der Composite in 4 l Aceton ausgefällt und bei 80 °C im Vakuumtrockenschrank getrocknet. Eine Platte (60 x 60 x 1 mm) wurde bei 220 °C/2,5 t gepreßt und die Lichtdurchlässigkeit mit der Apparatur gemaß Figur 1 gemessen.

In einer zweiten Serie wurden 12,5 g COC A1 (A2, A3) mit 4,17 g Glasfaser GF2 analog zu GF1a-Composites verarbeitet und die Preßplatten (60 x 60 x 1 mm) auf ihre Lichtdurchlässigkeit hin untersucht.

Die gemessenen Lichtdurchlässigkeiten in Abhängigkeit von der seitlichen Position des Fotosensors sind in den Figuren 2, 3 und 4 dargestellt. Die Lichtdurchlässigkeit wird errechnet aus dem Quotienten Intensitätsmaximum mit Probe/ Intensitätsmaximum ohne Probe.

Bei einem Brechungsindexunterschied von Cycloolefincopolymer und Glasfaser von kleiner als 0,015 ergab sich eine Lichtdurchlässigkeit (Direct Transmission) von über 40 %.

Beispiel B

Das Cycloolefincopolymere A4 sowie z.T. die funktionalisierten Cycloolefincopolymer-Haftvermittler und die Glasfaser GF1b wurden zunächst getrocknet (130 °C, 24 Stunden, Ölpumpenvakuum) und in einem Meßkneter (Fa. Haake (Karlsruhe), ®Rheocord System 40 / Rheomix 600) unter Schutzgas bei 240 °C, 40 UPM und 15 Minuten geknetet. Die erhaltenen Cycloolefinpolymer-Composites wurden zu Platten (60 x 60 x 1 mm) verpreßt (260 °C / 150 bar) und die Lichtdurchlässigkeiten in der Apparatur gemäß Fig. 1 vermessen.

Composites mit nicht entschlichteter Glasfaser weisen alle Lichtdurchlässigkeiten von kleiner als 40 % (am Intensitätsmaximum) auf, während die mit entschlichteter Glasfaser und die mit zusätzlich funktionalisiertem Cycloolefincopolymer-Haftvermittler Lichtdurchlässigkeiten größer 40 % aufweisen.

Der Composite mit Haftvermittler ®Hostaprime HC 5 (Maleinsäureanhydrid gepfropftes Polypropylen) zeigte wegen der großen Differenz der Brechungsindizes erwartungsgemäß die geringste Lichtdurchlässigkeit (kleiner 10 %).

Die Brechungsindizes und die Gehalte an polaren Monomeren der funktionalisierten Cycloolefincopolymere sind der Tabelle 7 zu entnehmen.

Tabelle 7

| funktionalisiertes Cycloolefincopolymer (Haftvermittler) | | $n_D^{23}$ Brechungsindex + |
|---|---|---|
| - Maleinsäureanhydrid | | |
| A4-P1 | 3,70 Gew.% | 1,5367 (1,5370) |
| A4-P2 | 1,58 Gew.% | 1,5310 (1,5370) |
| A4-P3 | 0.81 Gew.% | 1,5311 (1,5370) |
| A4-P4 | 0,19 Gew.% | 1,5310 (1,5370) |
| - Methacrylsäure | | |
| A4-P5 | 0,24 Gew.% | 1,5370 (1,5370) |
| - Triethoxyvinylsilan | | |
| A4-P6 | 6,98 Gew.% | 1,5360 (1,5370) |
| - Glycidylmethacrylat | | |
| A4-P7 | > 0,30 Gew.% | 1,5339 (1,5370) |
| ®Hostaprime HC 5 (zum Vergleich) (4,27 Gew.% Maleinsäureanhydrid) | | 1,5022 |

+ Brechungsindex mit Zeiss-Abbé-Refraktometer Typ 64165 bestimmt

Der Brechungsindex von nicht funktionalisiertem Cycloolefincopolymerausgangsmaterial (1,5370) ist zum Vergleich in Klammern angeführt.

Die Preßplatten wurden einem Zug-Dehnungsexperiment (Zug-Dehnungs-Prüfmaschine der Firma Instron (Typ: ®Instron 4302)) unterzogen, wobei sich folgende mechanische Daten der Cycloolefincopolymer-Composites (Mittelwerte aus 10 Messungen) ergaben (Tabelle 8).

Tabelle 8

| Cycloolefincopolymer [Gew.%] | Glasfaser GF1b [Gew.%] | Haftvermittler [phr] | Reißspannung [MPa] |
|---|---|---|---|
| 100 | - | - | 58,0 |
| 75 | 25 | - | 48,1 |
| 75 | 25 | A4-P3 (Maleinsäureanhydrid) 1.58 # | 69,5 |
| 75 | 25 | A4-P6 (Triethoxyvinylsilan) + 1,58 | 63,4 |
| zum Vergleich: 75 | 25 * | ®Hostaprime HC 5 0,30 # | 41,3 |

* Glasfaser mit vom Hersteller aufgebrachter Schlichte
# im Composite: gleicher Maleinsäureanhydridgehalt
+ mit Wasser vor dem Trocknungsprozeß benetzt
phr Gewichtsprozent bezogen auf die Gesamtmasse des Blends

## Patentansprüche

1. Glasfaserverstärktes Cycloolefinpolymer-Material bestehend aus 1 bis 99 Gew.-% mindestens eines Cycloolefinpolymers und 99 bis 1 Gew.-% Glasfaser, dadurch gekennzeichnet, daß der Absolutbetrag der Brechungsindexdifferenz (Brechungsindex von Glas der Glasfaser minus Brechungsindex Cycloolefinpolymer) für jedes Cycloolefinpolymer maximal 0,015 beträgt und der Brechungsindex der Glasfaser im Bereich von 1,510 bis 1,560 liegt.

2. Material gemäß Anspruch 1, dadurch gekennzeichnet, daß Cycloolefinpolymer ein Norbornen-Ethylen-Copolymer ist.

3. Material gemäß Anspruch 2, dadurch gekennzeichnet, daß das Norbornen-Ethylen-Copolymer aus 30 bis 75 Mol-% Ethylen und 25 bis 70 Mol-% Norbornen besteht.

4. Material gemäß Anspruch 1, 2 oder 3, dadurch gekennzeichnet, daß es 10 bis 90 Gew.-% mindestens eines Cycloolefinpolymers und 90 bis 10 Gew.-% Glasfaser enthält.

5. Formkörper bestehend aus dem Material gemäß Anspruch 1 oder 2.

6. Verfahren zur Herstellung eines glasfaserverstärkten Cycloolefinpolymer-Materials wobei man Glasfasern und ein Cycloolefinpolymer in einem Mischungsverhältnis Glasfaser/Cycloolefinpolymer von 1:99 bis 99:1 vermischt, dadurch gekennzeichnet, daß man handelsübliche Glasfasern, deren Glas einen Brechungsindex im Bereich von 1,510 bis 1,560 aufweist, von Schlichte befreit und dann mit einem Cycloolefinpolymer vermischt.

7. Verfahren nach Anspruch 6, dadurch gekennzeichnet, daß man eine Lösung des Cycloolefinpolymeren in einem organischen Lösemittel mit den Glasfasern vermischt und man das Lösungsmittel durch Verdunsten entfernt oder man das Gemisch in einen Überschuß an einem zweiten Lösungsmittel gießt, das mit dem ersten Lösungsmittel mischbar ist, in dem aber das Cycloolefinpolymer unlöslich ist, so daß das Cycloolefinpolymer auf den Glasfasern niedergeschlagen wird.

8. Verfahren nach Anspruch 6, dadurch gekennzeichnet, daß man eine Schmelze des Cycloolefinpolymeren mit der Glasfaser vermischt.

9. Verfahren nach Anspruch 6, dadurch gekennzeichnet, daß man die Glasfaser zur Entfernung der Schlichte auf 500 °C in einer Sauerstoff enthaltenden Atmosphäre erhitzt.

10. Verfahren nach Anspruch 6, dadurch gekennzeichnet, daß man die von Schlichte befreite Glasfaser mit einem organischen Haftvermittler überzieht.

11. Verfahren nach Anspruch 10, dadurch gekennzeichnet, daß man die Glasfaser mit einer Schmelze des organischen Haftvermittlers oder einer Lösung des organischen Haftvermittlers behandelt.

12. Verfahren nach Anspruch 10, dadurch gekennzeichnet daß der organische Haftvermittler ein funktionalisiertes Cycloolefinpolymer darstellt.

13. Verfahren nach Anspruch 12, dadurch gekennzeichnet, daß das funktionalisierte Cycloolefinpolymer durch Pfropfung eines Cycloolefinpolymeren mit einem polaren Monomeren hergestellt wurde.

14. Verfahren nach Anspruch 13, dadurch gekennzeichnet, daß das bei der Pfropfung verwendete polare Monomere ausgewählt wird aus der Gruppe $\alpha,\beta$-ungesättigte Carbonsäuren, $\alpha,\beta$-ungesättigte Carbonsäurederivate, organische Siliciumverbindungen mit olefinisch ungesättigter und hydrolysierbarer Gruppe, olefinisch ungesättigte Verbindungen mit Hydroxylgruppen und olefinisch ungesättigte Epoxymonomere.

15. Verfahren nach Anspruch 10, dadurch gekennzeichnet, daß der Haftvermittler ausgewählt wird aus der Gruppe der Vinylsilane, Methacrylsilane, Aminosilane, Epoxidsilane, und der Methacrylat-Chromchlorid-Komplexe.

**16.** Material gemäß Anspruch 1, dadurch gekennzeichnet, daß die eingesetzte Glasfaser aus Magnesium-Alumo-Silicat mit einem Brechungsindex von 1,510 - 1,560 besteht.

**17.** Material gemäß Anspruch 16, dadurch gekennzeichnet, daß die Glasfasern aus 60 bis 68 Gew.-% $SiO_2$, 23 bis 29 Gew.-% $Al_2O_3$ und 8 bis 12 Gew.-% MgO besteht.

**18.** Material gemäß Anspruch 17, dadurch gekennzeichnet daß die eingesetzte Glasfaser aus 64 Gew.-% $SiO_2$, 26 Gew.-% $Al_2O_3$ und 10 Gew.-% MgO besteht und einen Brechungsindex von 1,5234 aufweist.

**19.** Material gemäß Anspruch 16, dadurch gekennzeichnet, daß das Cycloolefinpolymer ein Cycloolefin-α-Olefin-Copolymer darstellt.

**20.** Material gemäß Anspruch 19, dadurch gekennzeichnet, daß das Cycloolefinpolymer ein Norbornen-Ethylen-Copolymer ist.

**21.** Haftvermittler, hergestellt durch Pfropfung eines Cycloolefinpolymers mit einem polaren Monomer, dadurch gekennzeichnet, daß das funktionalisierte Cycloolefinpolymer einen Gehalt an gepfropftem polaren Monomeren von 0,01 bis 50 Gew.-% aufweist.

**22.** Verwendung eines Cycloolefinpolymers, das mit einem polaren Monomeren gepfropft wurde, so daß das Pfropfungsprodukt 0,01 bis 50 Gew.-% gepfropftes polares Monomeres aufweist, als Haftvermittler für Glasfaser/Cycloolefinpolymer-Material.

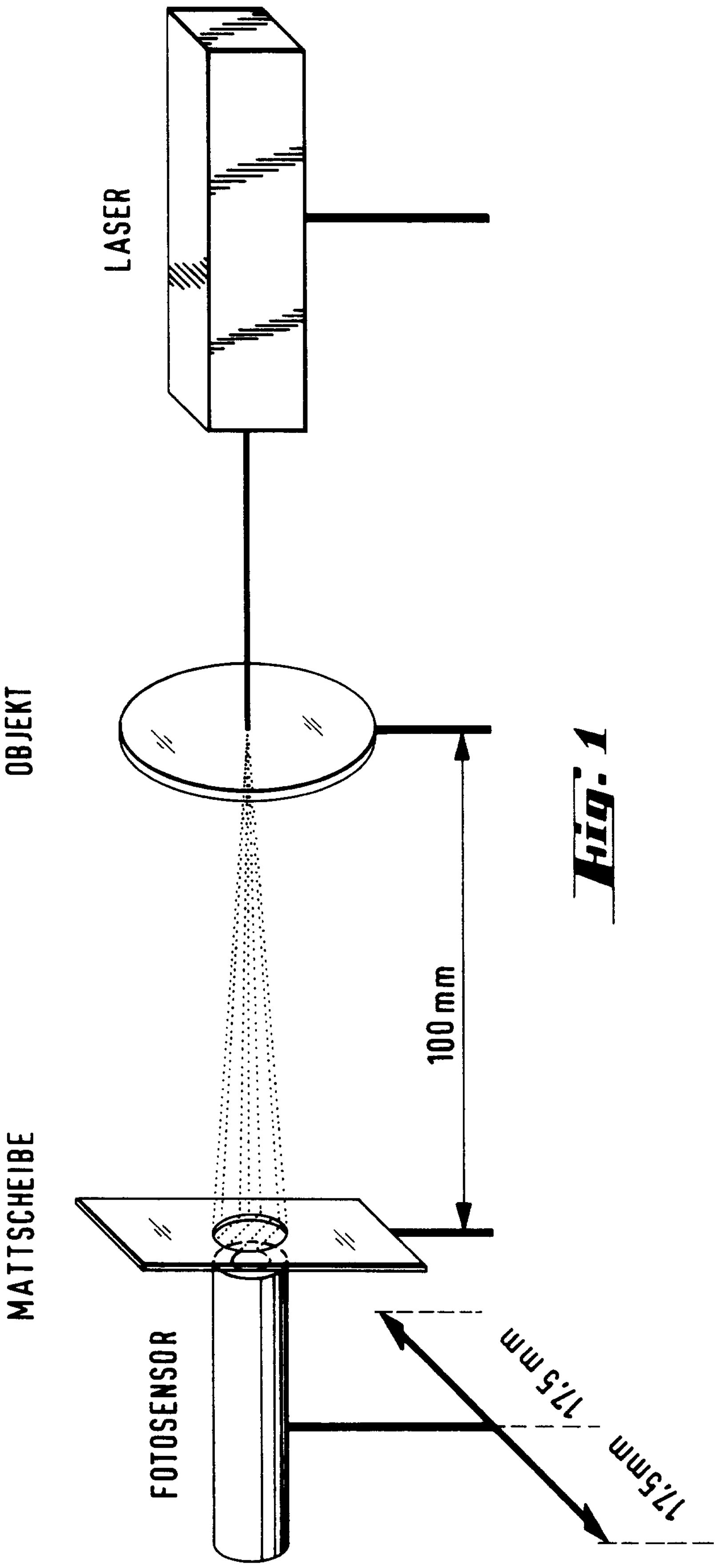


Fig. 1

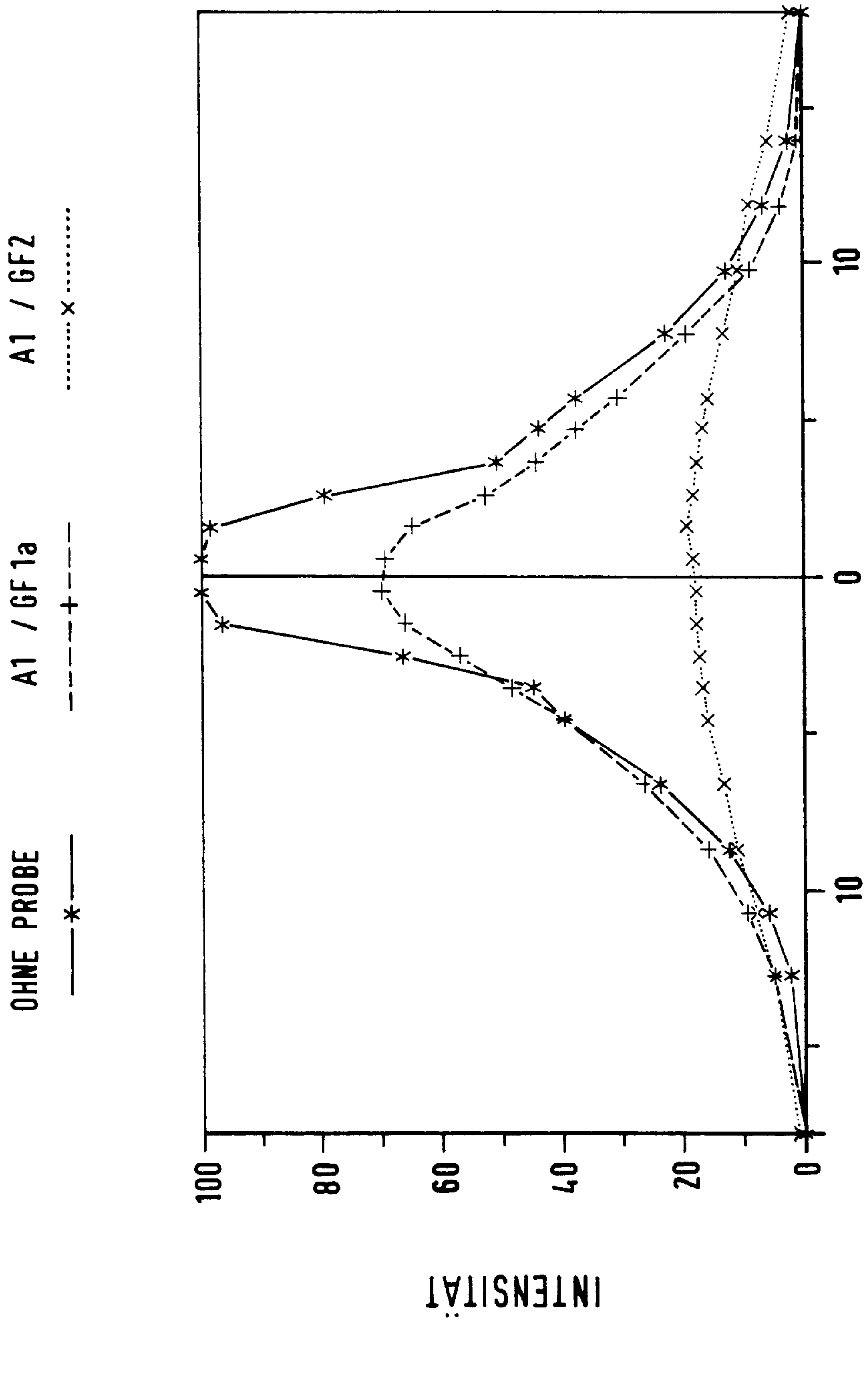


Fig. 2

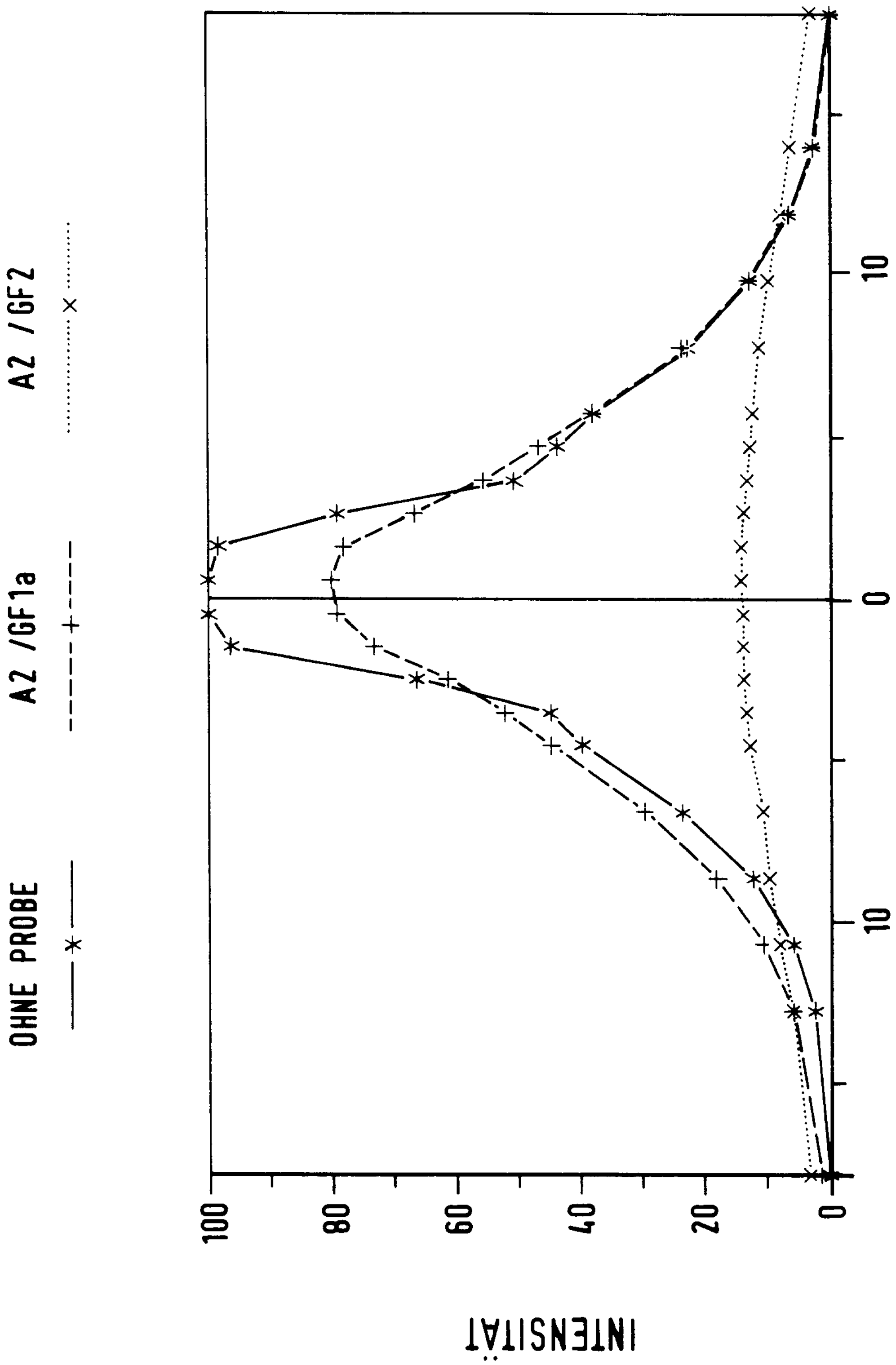


Fig. 3

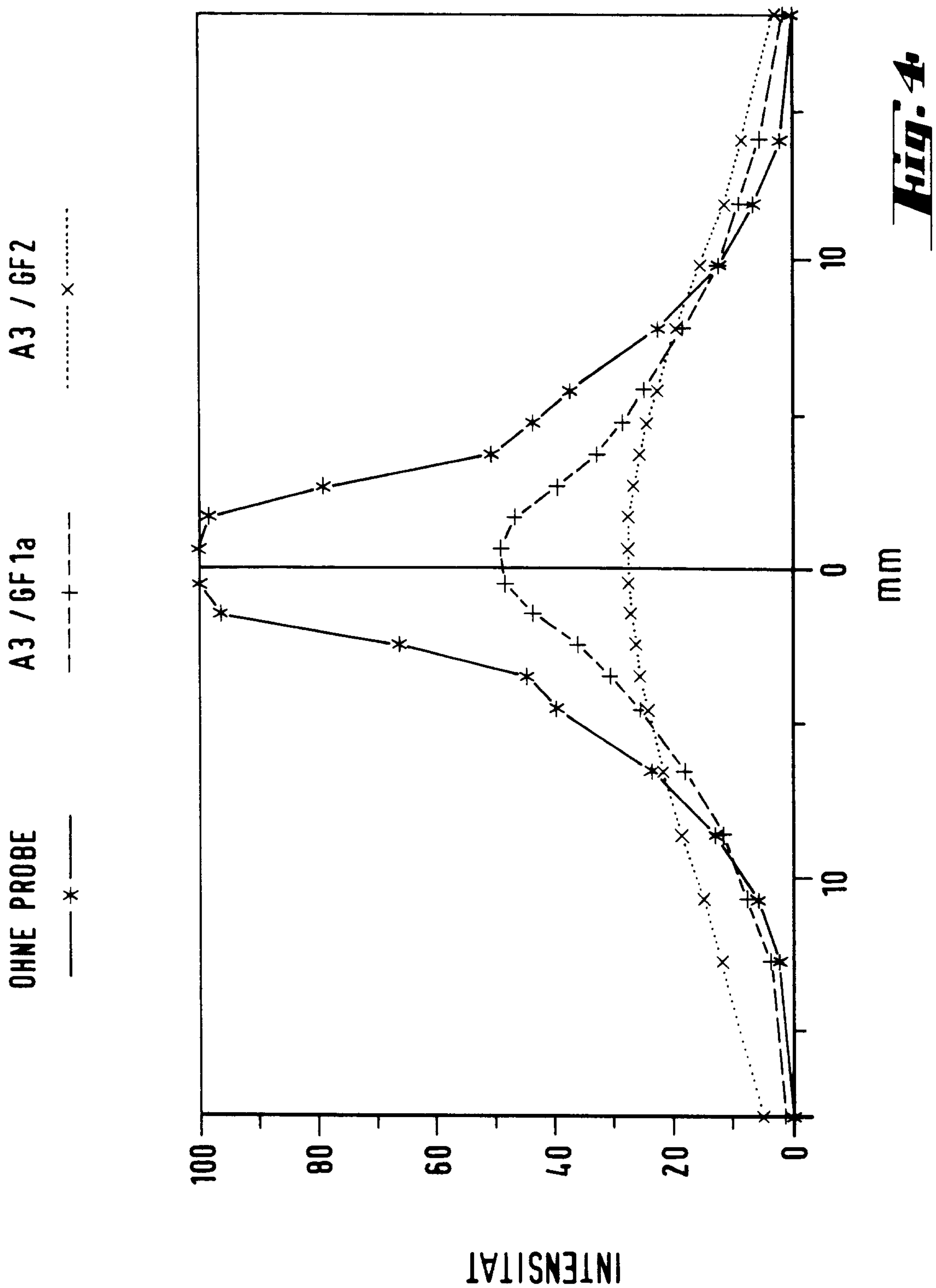


Fig. 4

Europäisches Patentamt

# EUROPÄISCHER RECHERCHENBERICHT

Nummer der Anmeldung
EP 93 11 9351

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,Y | DATABASE WPI Week 9143, Derwent Publications Ltd., London, GB; AN 91-313494 & JP-A-3 207 739 (MITSUI PETROCHEM. IND. K. K.) 11. September 1991 * Zusammenfassung * | 1-5 | C08K7/14 C08L45/00 |
| Y | DATABASE WPI Week 8528, Derwent Publications Ltd., London, GB; AN 85-168999 & JP-A-60 099 151 (ASAHI CHEM. IND. CO., LTD.) 3. Juni 1985 * Zusammenfassung * | 1-5 | |
| A | FR-A-2 407 951 (VEB LEUNA-WERKE "WALTER ULBRICHT") * Ansprüche * | 1 | |
| A | EP-A-0 353 766 (THE B.F. GOODRICH COMPANY) * Ansprüche * | 1 | RECHERCHIERTE SACHGEBIETE (Int.Cl.5) |
| A | US-A-3 032 434 (PAUL BENJAMIN ARCHIBALD ET AL.) * Ansprüche * | 6 | C08K C08L C03C |

Der vorliegende Recherchenbericht wurde für alle Patentansprüche erstellt

| Recherchenort | Abschlußdatum der Recherche | Prüfer |
|---|---|---|
| DEN HAAG | 17. März 1994 | DE LOS ARCOS, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)